# EUROPEAN PATENT APPLICATION

(11) **EP 3 627 582 A1**
(43) Date of publication of application: **25.03.2020**
(21) Application number: 18465577.7
(22) Date of filing: 21.09.2018
(51) Int. Cl.: H01M 2/10, H01M 10/625, H01M 10/653, H01M 10/647, H01M 10/6551, H01M 10/6567, H01M 10/651, H01M 10/613

(54) **BATTERY FOR A AT LEAST PARTIALLY ELECTRIC DRIVEN VEHICLE**

(71) Applicant: Continental Automotive GmbH, 30165 Hannover (DE)
(72) Inventor: Farago, Andrei, 410008 Oradea (RO); Amariei, Cornel Marian, 087075 Floresti (RO)

(57) **Abstract**

The invention concerns to a battery (10) for a at least partially electric driven vehicle, comprising at least one battery cell (12) with an outer surface (14), a porous material (16) with a plurality of pores, wherein the porous material (16) is at least partially arranged on the outer surface (14) of the battery cell (12), a battery housing (23) enclosing the at least one battery cell (12) and the porous material (16), comprising an inlet port (28) and an outlet port (30), and a coolant (38) for cooling the at least one battery cell (12), wherein the coolant (38) enters the battery housing (23) via the inlet port (28), flows through pores of the porous material (16) and is drained of the battery housing (23) via the outlet port (30).

## Description

The invention concerns to a battery for a at least partially electric driven vehicle, wherein a battery cell of the battery is at least partially surrounded by a porous material and a coolant flows through the porous material for cooling the battery cell.

Batteries for electric driven vehicles, especially for hybrid electric vehicles, are well known. During operation of the electric vehicles, the temperature of the batteries may increase. Therefore, the batteries for electric driven vehicles usually have a thermal battery management. The thermal battery management may comprise a passive cooling solution for battery cells of a battery using outside air, wherein fans set the outside air in motion for cooling the battery cells. However, the efficiency of the passive cooling solution using outside air might be reduced and not sufficient for the requirements of batteries in electric vehicles.

Furthermore, a thermal battery management using liquid for actively cooling the battery cells of a battery is also known. For actively cooling the battery cells, complex channels are arranged in the battery housing increasing the costs of the thermal battery management.

Hence, it is an object of the present invention to provide a battery for a at least partially driven electric vehicle, having an increased efficiency and reduced costs.

The object is achieved by the subject matter of the independent claim. Preferred embodiments of the invention are subject matter of the dependent claims or described hereinafter.

According to the invention, a battery for a at least partially electric driven vehicle is provided, comprising at least one battery cell with an outer surface, a porous material with a plurality of pores, wherein the porous material is at least partially arranged on the outer surface of the battery cell, a battery housing enclosing the at least one battery cell and the porous material, comprising an inlet port and an outlet port, and a coolant for cooling the at least one battery cell, wherein the coolant enters the battery housing via the inlet port, flows through pores of the porous material and is drained of the battery housing via the outlet port.

In other words, it is an aspect of the invention to provide a battery for a at least partially electric driven vehicle. A at least partially electric driven vehicle might be a completely electric driven vehicle, especially an electric vehicle, or a hybrid electric vehicle having an electric motor and a combustion engine. The battery comprises at least one battery cell, wherein the battery cell comprises an outer surface. The outer surface might be the housing of the single battery cell.

A porous material is at least partially arranged on the outer surface of the battery cell. Hence, the porous material is in direct contact with the outer surface of the battery cell. Preferably, no other layers are arranged between the outer surface and the porous material. Thus, due to the direct contact of the porous material and the battery cell, a direct thermal transfer from the battery cell to the porous material can be achieved.

The porous material comprises a plurality of pores, which are arranged and designed in such a way, that a medium of gas and/or liquid manner can flow through the pores. Due to the plurality of pores, the surface of the pores respectively the porous material, further described as the cooling surface of the porous material, can be enlarged. Due to the enlarged cooling surface, the efficiency for cooling the battery cell can be increased.

Furthermore, a battery housing for enclosing the battery cell and the porous material is provided. The battery housing comprises at least an inlet port and an outlet port. Additionally, a coolant for cooling the at least one battery cell is provided, wherein the coolant enters the battery housing via the inlet port. The coolant flows through the plurality of pores of the porous material extracting heat from the cooling surface of the porous material. Preferably, the coolant flows with a reduced flow rate at low pressure difference through the pores. The coolant exits the battery housing via an outlet arranged in the battery housing. Since the coolant flows through the plurality of pores, complex channels inside the battery housing can be avoided and costs can be reduced.

Hence, a battery for a partially electric driven vehicle is provided having an increased thermal battery management at reduced costs.

According to a preferred embodiment of the invention, the coolant is a fluid, preferably an ethylene glycol heat transfer fluid and/or a water and/or an oil. The coolant comprising a fluid, especially an ethylene glycol, has an increased thermal conductivity for extracting the heat from the cooling surface of the pores. Hence, the cooling efficiency of the thermal battery solution respectively management can be improved.

In a preferred embodiment of the invention, the porous material comprises a metal, preferably an aluminum and/or copper, more preferably graphene. The porous material comprising metal, respectively aluminum, copper and or preferably graphene has an increased thermal conductivity, increasing the thermal efficiency of the thermal battery management.

In a preferred embodiment of the invention, the battery further comprises a pumping unit, pumping the coolant into the battery housing and/or through the pores of the porous material. Hence, the coolant is at least actively pumped through the pores of the porous material. Due to the active cooling solution, the cooling efficiency of the battery cell can be increased.

In a preferred embodiment of the invention, the pumping unit is arranged outside of the battery housing. Hence, more than one battery in a at least partially electric driven vehicle can be supplied with coolant for cooling the at least one battery cell in one battery. Hence, parts of the thermal battery management for cooling the battery cell can be reduced, reducing the cost of the battery respectively thermal battery management.

Alternatively, according to a preferred embodiment of the invention, the pumping unit is arranged inside of the battery housing. Hence, the battery can be easily upgraded in a at least partially electric driven vehicle having only a fluid system without a pumping unit.

In a preferred embodiment of the invention, the porous material comprises a permeability between 0,1⁻¹⁰ m² and 0,9⁻¹⁰ m², preferably between 0,3⁻¹⁰ m² and 0,7⁻¹⁰ m², more preferably about 0,5⁻¹⁰ m². Hence, the porous material comprises a permeability for a low flow rate through the porous material. Due to the permeability of the porous material the flow rate of the coolant is reduced. Thus, the flow rate of the pumping unit can be reduced, too. Hence, costs and size of the pumping unit and/or the battery can be reduced.

In a preferred embodiment of the invention, the porosity of the porous material is between 40% and 95%, preferably between 60% and 95%, more preferably between 80% and 95%. A higher porosity may lead to a larger number of pores and therefore to an enlarged cooling surface of the pores. Hence, the thermal conductivity of the porous material can be increased. Besides the increased thermal conductivity of the porous material, the weight of the porous material having a higher porosity, especially lager than 80% and less than 95 %, might be reduced. Thus, the total weight of the battery can be reduced.

In a preferred embodiment of the invention, the outer surface of the battery cell is an outer shell surface. Preferably, the outer shell surface is arranged and/or exerts between a top surface and a bottom surface of the battery cell, wherein the top surface and the bottom surface are arranged spaced apart to each other on opposite sites. Preferably, the porous material surrounds the outer shell surface completely. The outer surface of the battery cell is impermeable for the coolant.

In a preferred embodiment of the invention, the inlet port and the outlet port are arranged spaced apart to each, preferably on opposite sides of the battery housing. The inlet port might be arranged in the battery housing facing the top surface of the battery cell and/or on a side of the battery housing facing the outer shell surface close to the top surface of the battery cell. The outlet port might be arranged in the battery housing facing the bottom surface of the battery cell and/or in a side of the battery housing facing the outer shell surface close to the bottom surface of the battery cell. Hence, the coolant enters the battery housing of the battery cell close to the top surface of the battery cell. The coolant exists the battery housing close to the bottom surface of the battery cell. Thus, the coolant flows through the porous material in a direction from top surface of the battery cell to the bottom surface of the battery cell, extracting heat form the porous material and/or the battery cell.

In a preferred embodiment of the invention, the battery housing comprises in its wall and/or on an inner side, facing the battery cells and/or the porous material, a guiding channel for guiding the coolant from the inlet port to the porous material and from the porous material to the outlet port. Hence, the coolant can be guided form the at least one inlet port to the porous material and form the porous material to the outlet port. Thus, the coolant can be precisely directed to the inlet port and/or to the outlet port.

In a preferred embodiment of the invention, the battery comprises a plurality of battery cells, wherein the outer surface of each battery cell is at least partially surrounded by the porous material. A plurality of battery cells is usually called a pack of cells.

The invention further concerns to a vehicle, preferably a at least partially electric driven vehicle, comprising a battery according to the present invention.

These and other aspects of the invention will be apparent from and elucidated with reference to the embodiments as per the drawings described hereinafter. In the following description, exemplary embodiments of the invention are explained with reference to the accompanying schematic drawing.
Fig. 1 shows an exploded view of the battery according to a preferred embodiment of the invention,
Fig. 2 shows a three-dimensional view of the battery according to the preferred embodiment of the invention,
Fig. 3 shows a longitudinal section of the battery according the preferred embodiment of the invention,
Fig. 4 shows results of a thermal battery management simulation in a graph,
Fig. 5 shows a temperature distribution in a longitudinal section of the battery for a cooling simulation of the battery comprising porous material on the outer surface of the battery cell,
Fig. 6 shows a temperature distribution in a longitudinal section of the battery for the cooling simulation of the battery comprising no porous material on the outer surface of the battery cell,
Fig. 7 shows a temperature distribution in a horizontal section of the battery for the cooling simulation of the battery comprising porous material on the outer surface of the battery cell,
Fig. 8 shows a temperature distribution in a horizontal section of the battery for the cooling simulation of the battery comprising no porous material on the outer surface of the battery cell,

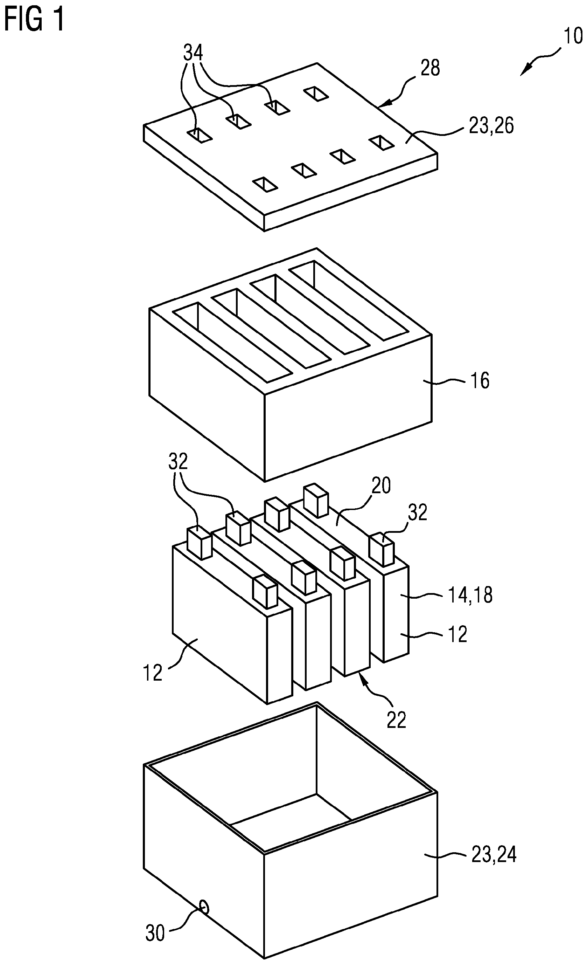

Fig. 1 shows an exploded view of a battery 10 for a at least partially electric driven vehicle. A at least partially electric driven vehicle might be a completely electric driven vehicle, especially an electric vehicle, or a hybrid electric vehicle having an electric motor and a combustion engine.

The battery 10 comprises at least one battery cell 12. In the present embodiment of the invention, the battery 10 comprises four battery cells 12, wherein the battery cells 12 are arranged spaced apart to each other. Each battery cell 12 comprises an outer surface 14. The outer surface 14 is the housing of each the single battery cells 12. Although the embodiment of the invention comprises four battery cells 12, it is only referred to one battery cell 12 in the further description. During operation of the at least partially driven electric vehicle, the temperature of the battery cell will raise. Hence, the battery cell needs to be cooled.

A porous material 16 is at least partially arranged on the outer surface 14 of the battery cell 12. Hence, the porous material 16 is in direct contact with the outer surface 14 of the battery cell 12. In the present embodiment, the outer surface 14 of the battery cell 12 is an outer shell surface 18. The outer shell surface 18 exerts between a top surface 20 and a bottom surface 22 of the battery cell 12, wherein the top surface 20 and the bottom surface 22 are arranged spaced apart to each other on opposite sites. The porous material 16 surrounds the outer shell surface 18 completely and no other layers are arranged between the outer surface 14 and the porous material 16. Thus, due to the direct contact of the porous material 16 and the battery cell 12, a direct thermal transfer between the battery cell 12 and the porous material 16 can be achieved.

The porous material 16 comprises a plurality of pores, which are arranged and designed in such a way, that a medium of gas and/or liquid manner can flow through the pores. Due to the plurality of pores, the surface of the pores respectively the porous material 16, further described as the cooling surface of the porous material, can be enlarged. Further, due to the enlarged cooling surface, the efficiency for cooling the battery cell 12 can be increased.

Furthermore, a battery housing 23 for enclosing the battery cell 12 and the porous material 16 is provided. In the present embodiment, the battery housing 23 comprises a bottom housing part 24 and a top housing part 26. The battery housing 23 comprises at least an inlet port 28 and an outlet port 30. The inlet port 28 and the outlet port 30 are arranged spaced apart to each other.

The inlet port 28 is arranged in the top housing part 26 facing the outer shell surface 18 close to the top surface 20 of the battery cell 12. The outlet port 30 is arranged in the bottom housing part 24 facing the outer shell surface 18 close to the bottom surface 22 of the battery cell 12.

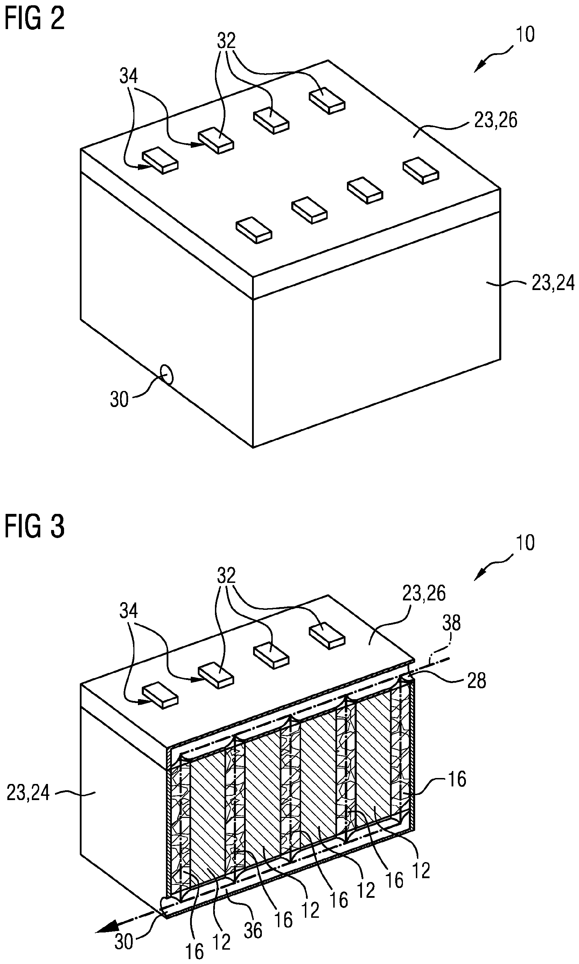

Fig. 2 shows a three-dimensional view of the battery 10 described in Fig. 1. The battery cells 12 and the porous material 16 are enclosed by the battery housing 23. Contacts 32 of the battery cell 12, arranged on the top surface 20 of the battery cell 12, are of fed through respective contact openings 34 arranged in the top housing part 26 of the battery housing 23.

Fig. 3 shows a longitudinal section of the battery 10. The battery housing 23 comprises in the wall of the housing and/or on an inner side, facing the battery cells 12, a guiding channel 36 for guiding a coolant 38 from the inlet port 28 to the porous material 16 and from the porous material 16 to the outlet port 30.

The coolant 38 for cooling the at least one battery cell 12 enters the battery housing 23 via the inlet port 28. The coolant 38 is guided via the guiding channel 36 in the top housing part to the porous material 16 surrounding the battery cell 12. The coolant flows through the plurality of pores of the porous material 16 extracting heat from the cooling surface of the pores respectively the porous material 16. After extracting the heat from the cooling surface of the pores, the coolant 38 is guided via the guiding channel 36 in the bottom housing part 24 to the outlet port 30. Since the coolant 38 flows through the plurality of pores for the porous material, complex cooling channels inside the battery housing 22 can be reduced. Thus, costs of the battery and/or the thermal battery management can be reduced.

Since the coolant 38 enters the battery housing 23 through the inlet port 28 close to the top surface 20 of the battery cell 12 and exists the battery housing 23 via the outlet port 30 close to the bottom surface 22 of the battery cell 12, the coolant 38 flows through the porous material 16 in a direction from top surface 20 of the battery cell 12 to the bottom surface 22 of the battery cell 12, extracting heat form the porous material 16 and the battery cell 12.

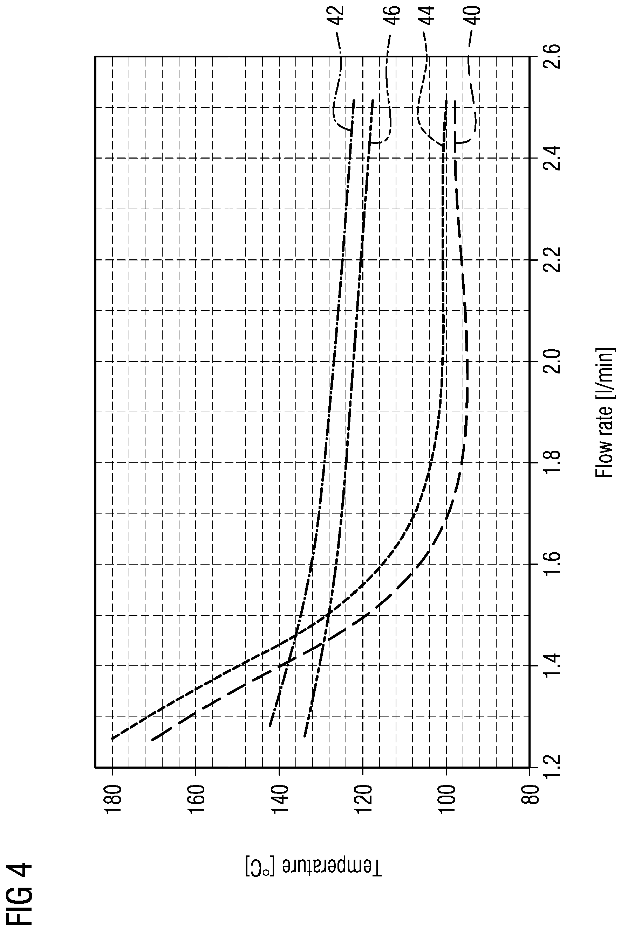

Fig. 4 shows results of a thermal battery management simulation of the battery 10 in a graph. The horizontal axis describes the Flow rate [l/min] of the coolant 38. The vertical axis describes the maximum temperature [°C] of the battery cell 12.

The maximum temperature of the battery cell 12 depending on the flow rate of the coolant 38 is shown for two different battery designs. One first battery design according to the invention with a porous material 16 surrounding the battery cell 12 and a second battery design without the porous material, which is not part of the invention. For each battery design, the results are given for a longitudinal section through the battery 10 and for a horizontal section through the battery close to the bottom surface 22 of the battery cell 12.

The porous material 16 in the simulation for the first battery design comprises graphene with a porosity of 92% and a permeability of 0,5⁻¹⁰ m².

For the first and second battery design, the coolant 38 comprises glycol-water. The coolant is pressed with a pressure of 1 bar measured at an outlet of a pumping unit. The temperature of the coolant entering the battery housing is 80°C. The flow rate for the coolant is 0,08 kg/sec. The battery cell has a heat source of 350W. The environmental temperature for the simulation is 100°C.

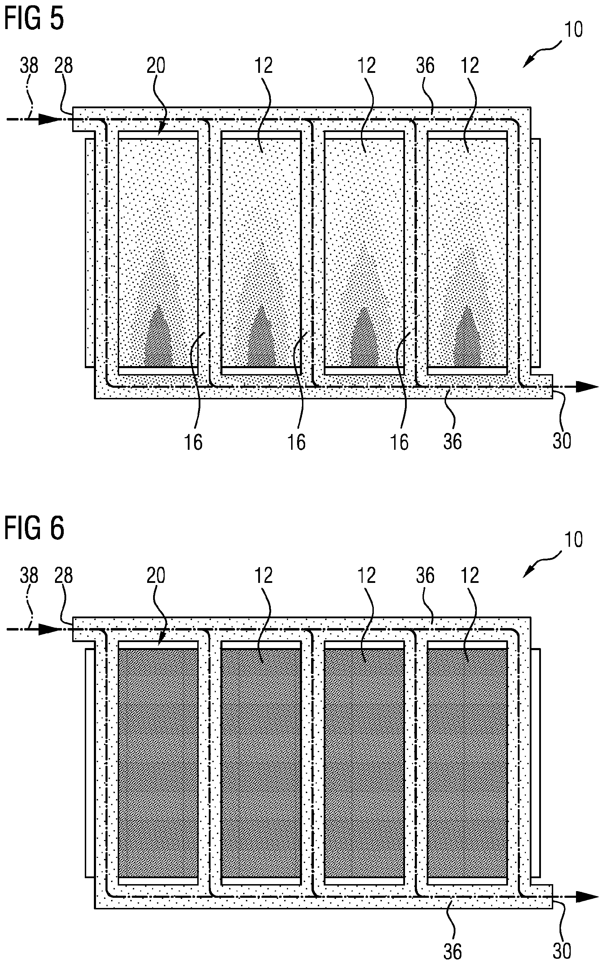

Line 1 (reference sign 40) shows the maximum temperature of the battery cell 12 depending on the flow rate for the first battery design comprising the porous material 16 for a longitudinal section through the battery 10. For a flow rate of 1,67 l/min the maximum temperature of the battery 10 close to the bottom surface 22 of the battery cell 12 is about 100°C. A corresponding temperature distribution of the battery 10 is shown in Fig. 5. The coolant 38 enters the battery 12 via the inlet port 28 close to the top surface 20 of the battery cell 12 and is guided via the guiding channel 36 to the porous material 16. The coolant 38 flows through the pores of the porous material 16 extracting heat from the porous material 16 and the battery cell 12. Since the coolant 38 flows through the porous material 16 in a direction from the top surface 20 of the battery cell 12 to the bottom surface 22 of the battery cell 12, the coolant 38 heats up on its way to the bottom surface 22.

Line 2 (reference sign 42) shows the maximum temperature of the battery cell 12 depending on the flow rate for the second battery design without the porous material for a longitudinal section through the battery 10. For a flow rate of 1,67 l/min the maximum temperature of the battery 10 close to the bottom surface 22 of the battery cell 12 is about 130°C. A corresponding temperature distribution of the battery is shown in Fig. 6. The coolant 38 enters the battery 10 via the inlet port 28 close to the top surface 20 of the battery cell 12 and is guided via the guiding channel 36 between the battery cells 12. The coolant 38 flows between the battery cells 12 in a direction from top surface 20 of the battery cell 12 to the bottom surface 22 of the battery cell 12. Compared to the first battery design, having the porous material, the second battery design has a reduced cooling surface, namely only the outer surface of the battery cell. Hence, the extraction of heat by the coolant is reduced and the maximum temperature of the cells is higher compared to the temperature of the battery according to the first design having the porous material.

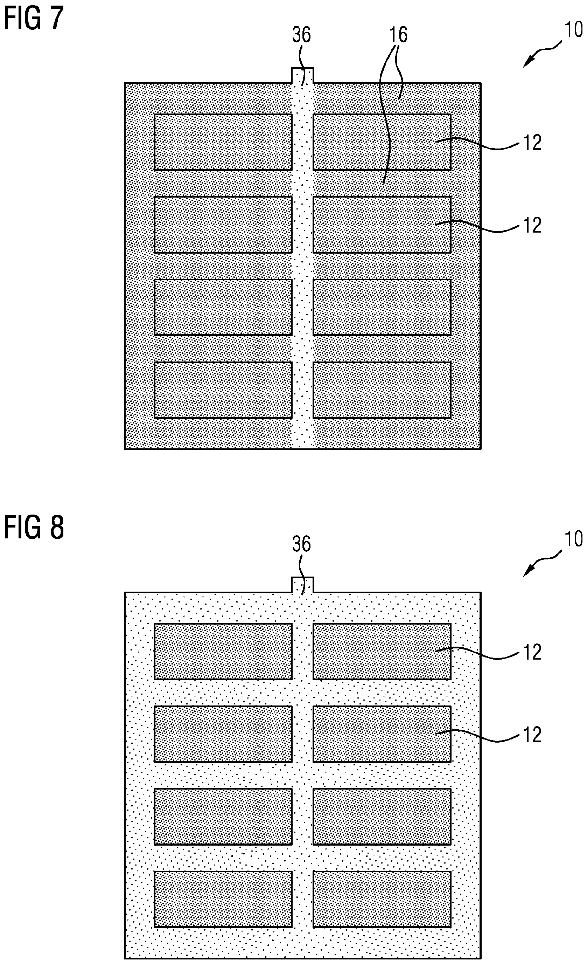

Line 3 (reference sign 44) shows the maximum temperature of the battery cell 12 depending on the flow rate for the first battery design comprising the porous material 16 for a horizontal section through the battery 10 close to the bottom surface 22 of the battery cell 12. For a flow rate of 1,67 l/min the maximum temperature in the battery 10 close to the bottom surface 22 of the battery cell 12 is about 108°C. A corresponding temperature distribution of the battery 10 is shown in Fig. 7. Since the coolant 38 flows through the porous material 16 in a direction from the top surface 20 of the battery cell 12 to the bottom surface 22 of the battery cell 12, the coolant 38 heats up on its way to the bottom surface 22. Thus, the battery 10 comprises a mainly uniform temperature distribution in horizontal direction of the battery 10 close to the bottom surface 22 of the battery cells 12.

Line 4 (reference sign 46) shows the maximum temperature of the battery cell 12 depending on the flow rate for the second battery design without the porous material for a horizontal section through the battery 10 close to the bottom surface 22 of the battery cell 12. For a flow rate of 1,67 l/min the maximum temperature in the battery 10 close to the bottom surface 22 of the battery cell 12 is about 125°C. A corresponding temperature distribution of the battery 10 is shown in Fig. 8. The coolant 38 flows between the battery cells 12 in a direction from top surface 20 of the battery cell 12 to the bottom surface 22 of the battery cell 12. Compared to the first battery design, having the porous material 16, the second battery design has a reduced cooling surface, namely only the outer surface of the battery cell. Thus, the extraction of heat by the coolant 38 is reduced and the coolant 38 cannot extract as much heat as it could. Hence, there is no uniform heat distribution close to the bottom surface 22 of the battery cell 12 in horizontal direction of the battery 10.

Due to the low flow rate of the coolant 38, the pumping unit for pumping the coolant 38 through the porous material 16 can be reduced. Thus, cost of the pumping unit and/or battery 10 can be reduced. Due to the enlarged cooling surface of the thermal conductive porous material 16, the coolant 38 can extract heat from the porous material 16 respectively the battery cell efficiently. Thus, the efficiency for cooling the battery can be increased.

### Reference signs

- 10: Battery
- 12: Battery cell
- 14: Outer surface
- 16: Porous material
- 18: Outer shell surface
- 20: Top surface of battery cell
- 22: Bottom surface of battery cell
- 23: Battery housing
- 24: Bottom housing part
- 26: Top housing part
- 28: Inlet port
- 30: Outlet port
- 32: Contact
- 34: Contact opening
- 36: Guiding Channel
- 38: Coolant
- 40: Line 1
- 42: Line 2
- 44: Line 3
- 46: Line 4

## Claims

1. Battery (10) for a at least partially electric driven vehicle, comprising
at least one battery cell (12) with an outer surface (14), a porous material (16) with a plurality of pores, wherein the porous material (16) is at least partially arranged on the outer surface (14) of the battery cell (12),
a battery housing (23) enclosing the at least one battery cell (12) and the porous material (16), comprising an inlet port (28) and an outlet port (30), and
a coolant (38) for cooling the at least one battery cell (12), wherein the coolant (38) enters the battery housing (23) via the inlet port (28), flows through pores of the porous material (16) and is drained of the battery housing (23) via the outlet port (30) .

2. Battery according to claim 1, **characterized in that** the coolant (38) is a fluid, preferably an ethylene glycol heat transfer fluid and/or a water and/or an oil.

3. Battery according to claim 1 or 2, **characterized in that** the porous material (16) comprises a metal, preferably an aluminum and/or copper, more preferably graphene.

4. Battery according to one of the previous claims, **characterized in that** the battery (10) further comprises a pumping unit pumping the coolant (38) into the battery housing (23) and/or through the pores of the porous material (16).

5. Battery according to claim 4, **characterized in that** the pumping unit is arranged outside of the battery housing (23).

6. Battery according to claim 4, **characterized in that** the pumping unit is arranged inside of the battery housing (23).

7. Battery according to one of the previous claims, **characterized in that** the porous material (16) comprises a permeability between 0,1⁻¹⁰ m² and 0,9⁻¹⁰ m², preferably between 0,3⁻¹⁰ m² and 0,7⁻¹⁰ m², more preferably about 0,5⁻¹⁰ m².

8. Battery according to one of the previous claims, **characterized in that** the porosity of the porous material (16) is between 40% and 95%, preferably between 60% and 95%, more preferably between 80% and 95%.

9. Battery according to one of the previous claims, **characterized in that** the outer surface (14) of the battery cell (12) is an outer shell surface (18).

10. Battery according to claim 9, **characterized in that** the outer shell surface (18) is arranged and/or exerts between a top surface (20) and a bottom surface (22) of the battery cell (12), wherein the top surface (20) and the bottom surface (22) are arranged spaced apart to each other on opposite sides.

11. Battery according to one of the previous claims, **characterized in that** the inlet port (28) and the outlet port (30) are arranged spaced apart to each other, preferably on opposite sides of the battery housing (23).

12. Battery according to one of the previous claims, **characterized in that** battery housing (23) comprises in its wall and/or on an inner side, facing the battery cells (12) and/or the porous material (16), a guiding channel (36) for guiding the coolant (38) from the inlet port (28) to the porous material (16) and from the porous material (16) to the outlet port (30).

13. Battery according to one of the previous claims, **characterized in that** the battery (10) comprises a plurality of battery cells (12), wherein the outer surface (14) of each battery cell (12) is at least partially surrounded by the porous material (16) .

14. Vehicle, especially a hybrid electric vehicle, comprising a battery (10) according to one of the previous claims.
